# EUROPEAN PATENT APPLICATION

(11) **EP 4 821 899 A1**
(43) Date of publication of application: **14.10.2026**
(21) Application number: 24900626.3
(22) Date of filing: 03.12.2024
(51) Int. Cl.: C03B 37/035

(54) **MANUFACTURING METHOD FOR OPTICAL FIBER**

(30) Priority: 04.12.2023 JP 2023204611
(71) Applicant: Sumitomo Electric Industries, Ltd., Osaka-shi, Osaka 541-0041 (JP)
(72) Inventor: WATANABE, Yudai, Osaka-shi, Osaka 541-0041 (JP); OKAZAKI, Iwao, Osaka-shi, Osaka 541-0041 (JP); KOHDA, Hiroshi, Osaka-shi, Osaka 541-0041 (JP)
(74) Representative: TBK
(86) International application number: PCT/JP2024/042756
(87) International publication number: WO 2025/121332

(57) **Abstract**

This method for manufacturing an optical fiber includes: a step for melting an optical fiber preform and drawing an optical fiber; a step for causing the drawn optical fiber to contact a roller that switches the traveling direction of the optical fiber; and a step for measuring the location at which the optical fiber contacts the roller.

## Description

### TECHNICAL FIELD

The present disclosure relates to a method of manufacturing an optical fiber. This application claims priority based on Japanese Patent Application No. 2023-204611 filed on December 4, 2023, the entire contents of which are incorporated herein by reference.

### BACKGROUND ART

Patent literature 1 describes a twist measurement method of an optical fiber. In the twist measurement method, an optical fiber is irradiated with light from a plurality of irradiation positions, and an intensity distribution of the light transmitted through the optical fiber is detected at a plurality of detection positions. Based on the detected plurality of intensity distributions, the twist of the optical fiber is calculated.

### CITATION LIST

### PATENT LITERATURE

Patent literature 1: WO 2023/095916

### SUMMARY OF INVENTION

A method of manufacturing an optical fiber according to an aspect of the present disclosure includes melting an optical fiber preform to draw an optical fiber, bringing the optical fiber into contact with a roller that changes a running direction of the optical fiber that is drawn, and measuring a position at which the optical fiber is in contact with the roller.

### BRIEF DESCRIPTION OF THE DRAWINGS

[FIG. 1] FIG. 1 is a schematic view of a manufacturing apparatus used in a method of manufacturing an optical fiber according to an embodiment.
[FIG. 2] FIG. 2 is a perspective view showing a bottom roller and an optical fiber of the manufacturing apparatus of FIG. 1.
[FIG. 3] FIG. 3 is a view for explaining the inclination of the bottom roller of FIG. 2.
[FIG. 4] FIG. 4 is a diagram for explaining a step of measuring a position.
[FIG. 5] FIG. 5 is a diagram for explaining a step of adjusting a position or an inclination of the roller.

### DETAILED DESCRIPTION

When the optical fiber is twisted, handling of the optical fiber may become complicated. Thus, it is required to be able to determine the degree of twist of the optical fiber.

An object of the present disclosure is to provide a method of manufacturing optical fibers which can determine the degree of twist of the optical fibers.

According to the present disclosure, the optical fiber can determine the degree of twist of the optical fibers.

### [Description of Embodiments of Present Disclosure]

First, embodiments of the present disclosure will be listed and described. (1) A method of manufacturing an optical fiber according to one embodiment includes melting an optical fiber preform to draw an optical fiber, bringing the optical fiber into contact with a roller that changes a running direction of the optical fiber that is drawn, and measuring a position at which the optical fiber is in contact with the roller.

In the method of manufacturing the optical fiber, the degree of twist of the optical fiber can be determined by measuring the position of the optical fiber in contact with the roller that changes the running direction of the optical fiber.

(2) In the above (1), the roller may be a bottom roller configured to change the running direction of the optical fiber pulled out vertically downward. In this case, it is possible to measure the contact position of the optical fiber in the bottom roller where the twist is likely to occur.

(3) In the above (1) or (2), the measuring may include measuring a relative position of the optical fiber with respect to a reference point of the roller. In this case, the position of the roller can be measured with higher accuracy by measuring the relative position of the optical fiber with respect to the reference point of the roller.

(4) In any one of the above (1) to (3), the measuring may include measuring the positions at which the optical fiber is in contact with the roller at a plurality of portions of the roller. In this case, the degree of twist of the optical fiber can be determined with higher accuracy by measuring the position at which the optical fiber is in contact with the roller at a plurality of portions of the roller.

(5) The method of manufacturing an optical fiber according to any one of the above (1) to (4) may include adjusting a position or an inclination of the roller according to the position measured in the measuring. In this case, the twist of the optical fiber can be reduced by adjusting a position or an inclination of the roller according to the position at which the optical fiber is in contact.

### [Details of Embodiments of Present Disclosure]

Specific examples of the method of manufacturing the optical fiber of the present disclosure are described below with reference to the drawings. The present invention is not limited to the following examples, but is defined by the appended claims, and is intended to include all modifications within the meaning and scope equivalent to the appended claims. In the description of the drawings, the same or corresponding elements are denoted by the same reference numerals, and redundant description will be omitted as appropriate. The drawings may be simplified or exaggerated as appropriate for ease of understanding, and the dimensional ratios and the like are not limited to those shown in the drawings.

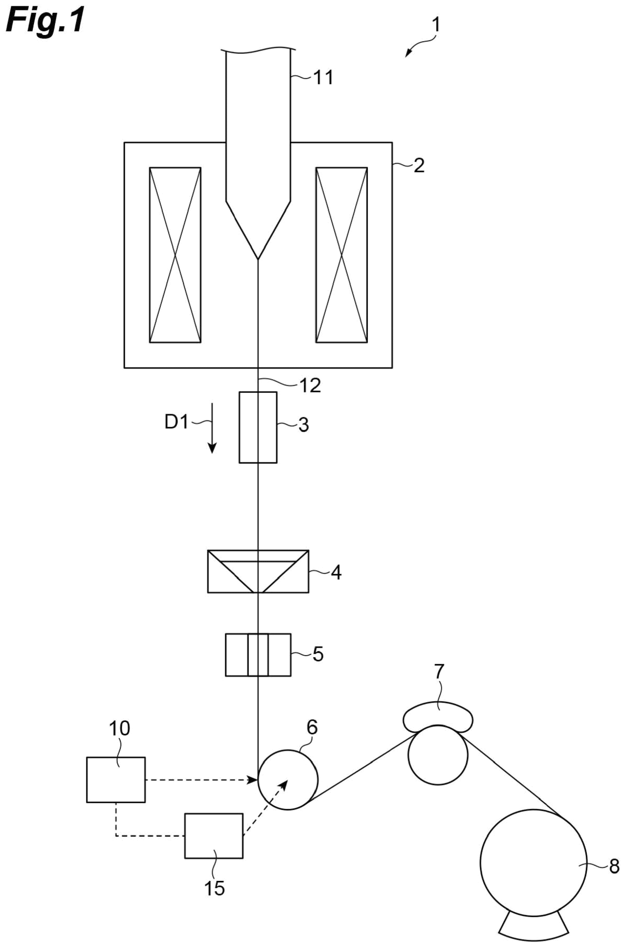

FIG. 1 is a diagram showing a manufacturing apparatus used for a method of manufacturing an optical fiber according to an embodiment. As shown in FIG. 1, a manufacturing apparatus 1 has a heating furnace 2, a cooling apparatus 3, a dice 4, a resin curing portion 5, a roller 6, a capstan 7, a winding drum 8, and a measurement portion 10. The heating furnace 2, the cooling apparatus 3, the dice 4, the resin curing portion 5, the roller 6, the capstan 7, and the winding drum 8 are arranged in this order along a running direction D1 of an optical fiber 12.

The heating furnace 2 heats an optical fiber preform 11. The optical fiber preform 11 melts by heating the optical fiber preform 11 with the heating furnace 2. The optical fiber 12 is drawn vertically downward from the lower end of the optical fiber preform 11 melted in the heating furnace 2. The cooling apparatus 3 cools the optical fiber 12.

The dice 4 applies the surface of the optical fiber 12 with a coating resin. The dice 4 is, for example, a jig having a hole in which the optical fiber 12 passes at the central portion. The dice 4 is supplied with a liquid coating resin, and applies the coating resin to the surface of the optical fiber 12 passing through the hole. In the present embodiment, the coating resin is an ultraviolet curable resin. The resin curing portion 5 cures the coating resin applied to the surface of the optical fiber 12. In the present embodiment, the resin curing portion 5 is an ultraviolet irradiation device, and cures the coating resin by irradiating ultraviolet rays.

The roller 6 is a bottom roller disposed vertically downward the optical fiber preform 11. The roller 6 abuts on the optical fiber 12 and changes the running direction D1 of the optical fiber 12 from the vertically downward direction to a direction different from the vertically downward direction. The capstan 7 has a function of pulling the optical fiber 12, and the winding drum 8 has a function of winding the optical fiber 12.

The measurement portion 10 measures a position at which the optical fiber 12 is in contact with the roller 6. For example, the manufacturing apparatus 1 has a control portion 15 for controlling the position or inclination of the roller 6 according to the position of the optical fiber 12 measured by the measurement portion 10. The functions of the measurement portion 10 and the control portion 15 will be described in detail subsequently.

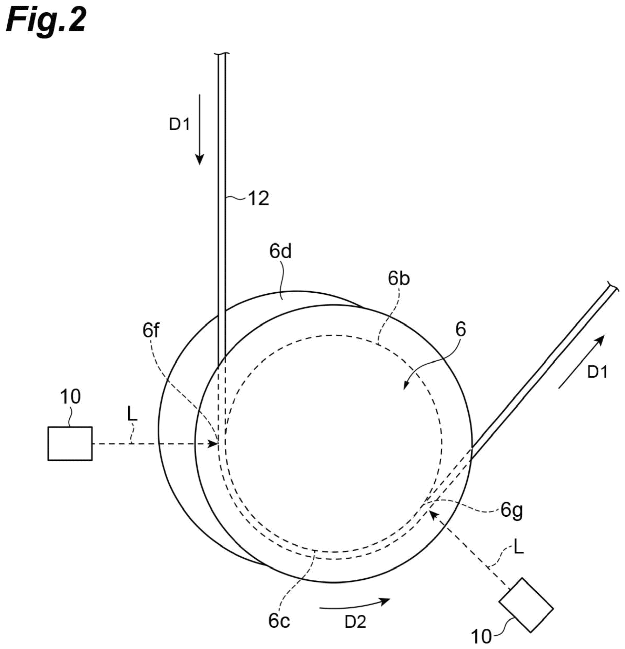

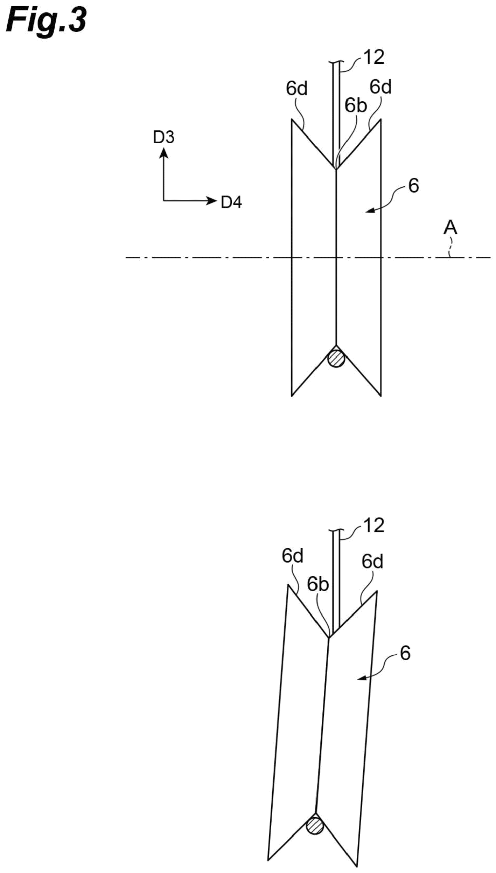

FIG. 2 and FIG. 3 are diagrams schematically showing the roller 6 and the optical fiber 12. For example, the peripheral surface of the roller 6 has a groove 6b extending along a rotation direction D2 of the roller 6. As an example, the groove 6b is a V-groove (a groove having a V-shaped cross section including the depth direction). For example, the groove 6b is formed by a pair of inclined surfaces 6d that are inclined with respect to a direction D3 in which the diameter of the roller 6 extends and are arranged along a direction D4 in which a rotation axis A of the roller 6 extends.

The groove 6b of the roller 6 is in contact with the optical fiber 12 extending vertically downward from the resin curing portion 5. By the roller 6 being rotated in a state where the optical fiber 12 is in contact with the groove 6b, the running direction D1 of the optical fiber 12 is changed from the vertically downward direction to a direction different from the vertically downward direction. As an example, the running direction D1 of the optical fiber 12 is changed to an upward diagonal direction.

For example, the roller 6 has a contact portion 6c with which the optical fiber 12 is in contact, and the contact portion 6c extends along the rotation direction D2. By the way, the twist of the optical fiber 12 may occur at the roller 6. For example, when the rotation axis of the roller 6 is perpendicular to the vertical direction, the optical fiber 12 entering the roller 6 comes into contact near the connection point of the pair of inclined surfaces 6d.

When the direction D3 in which the diameter of the roller 6 extends is inclined with respect to the vertical direction, the optical fiber 12 entering the roller 6 may contact only one inclined surface 6d. In this case, the twist of the optical fiber 12 may occur at the roller 6. More specifically, when the optical fiber 12 enters the roller 6, the optical fiber 12 comes in contact only with one inclined surface 6d, and when the optical fiber 12 exits the roller 6, the optical fiber 12 is located near the connection point of the pair of inclined surfaces 6d. During this process, the optical fiber is twisted by the inclined surface with which the optical fiber is in contact. The greater the inclination of the direction D3 with respect to the vertical direction, the more the amount of twist in the optical fiber 12 may increase.

In the present embodiment, the measurement portion 10 is used to observe where the optical fiber 12 is in contact with the roller 6. The measurement portion 10 is, for example, a laser measuring device. In this case, the measurement portion 10 irradiates the roller 6 and the optical fiber 12 with a laser beam L. For example, the measurement portion 10 receives light reflected from the roller 6 and the optical fiber 12 in accordance with the irradiation of the laser beam L, and measures the position of the optical fiber 12 at the roller 6 by detecting the distances from the measurement portion 10 to the roller 6 and to the optical fiber 12.

For example, the manufacturing apparatus 1 may have the plurality of measurement portions 10. The measurement portion 10 may measure positions at which the optical fiber 12 is in contact with a plurality of portions of the roller 6. For example, the measurement portion 10 measures the positions at which the optical fiber 12 is in contact with both an upstream end portion 6f and a downstream end portion 6g of the contact portion 6c of the roller 6. However, the measurement portion 10 may measure the position at which the optical fiber 12 is in contact with one portion of the roller 6. For example, the measurement portion 10 may measure a position at which the optical fiber 12 is in contact with the upstream end portion 6f of the contact portion 6c of the roller 6.

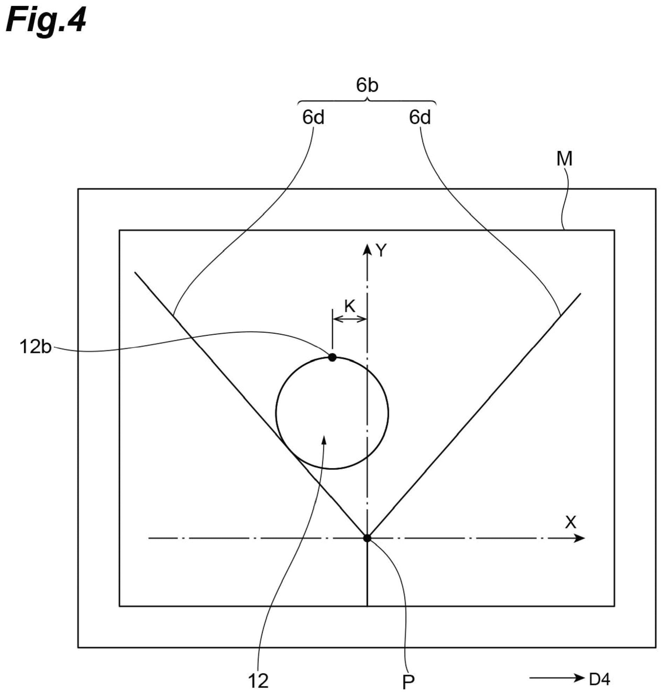

FIG. 4 is the diagram showing the example of the result measured by the measurement portion 10. For example, the result measured by the measurement portion 10 is displayed on a monitor M. In the present embodiment, the measurement portion 10 measures the position of the optical fiber 12 with respect to the groove 6b of the roller 6. For example, the measurement portion 10 sets an intersection of the pair of inclined surfaces 6d as a reference point P, and measures a relative position of a top point 12b of the optical fiber 12 with respect to the reference point P.

The top point 12b is a point of the optical fiber 12 that is positioned at a position farthest from an X axis that passes through the reference point P and extends along the direction D4 in which the rotation axis A of the roller 6 extends. For example, the measurement portion 10 may use a line that is orthogonal to the X axis and passes through the reference point P as a Y axis, and measure a distance K from the Y axis to the top point 12b as the amount of deviation in the position of the optical fiber 12. In this case, the possibility of the twist of the optical fiber 12 can be determined based on the value of the distance K.

After the measurement step of measuring the position of the optical fiber 12 in contact with the roller 6, an adjustment step of adjusting a position or an inclination of the roller 6 is performed according to the position of the optical fiber 12 measured by the measurement portion 10, for example. The adjustment step is executed by the control portion 15. The control portion 15 is communicably connected to the measurement portion 10 and the roller 6.

The control portion 15 may be configured as a computer system including a processor such as a central processing unit (CPU), a memory such as a random access memory (RAM) and a read only memory (ROM), an input/output device such as a touch panel, a mouse, a keyboard, and a display, and a communication device such as a network card. The control portion 15 implements the functions of the control portion 15 by operating each hardware under the control of a processor based on a computer program stored in memory.

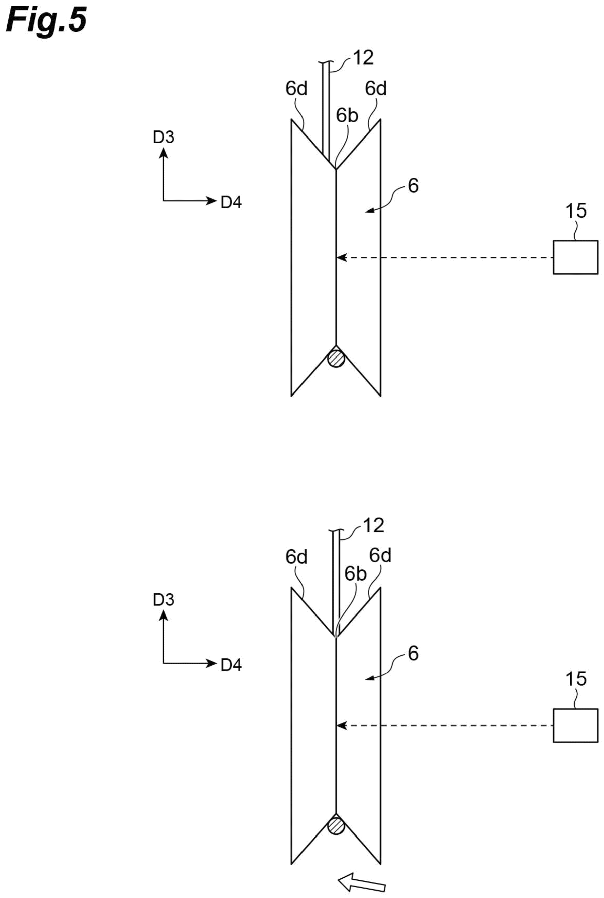

FIG. 5 is the schematic diagram for explaining the adjustment step. As shown in FIG. 5, the control portion 15 controls the roller 6 to change the position of the roller 6 based on the position of the optical fiber 12 with respect to the roller 6 measured by the measurement portion 10. For example, the control portion 15 transmits a control signal based on the measurement result by the measurement portion 10 to the roller 6, and adjusts the position of the roller 6 in the direction D4 in which the rotation axis A extends or the inclination of the roller 6. The control portion 15 moves the portion receiving the rotation axis of the roller 6 by outputting a control signal to an actuator that moves the portion receiving the rotation axis of the roller 6.

For example, the control portion 15 adjusts a position or an inclination of the roller 6 so that the point at which the optical fiber 12 first contacts the roller 6 is near the connection point of the pair of inclined surfaces 6d. By performing this adjustment step, the possibility of the optical fiber 12 being twisted can be reduced. However, the adjustment step is not necessarily required.

As described above, in the method of manufacturing the optical fiber according to the embodiment, the measurement portion 10 measures the position of the optical fiber 12 in contact with the roller 6 that changes the running direction D1 of the optical fiber 12, thereby it is possible to determine the degree of twist of the optical fiber 12. In the present embodiment, the measurement portion 10 enables observation of where the optical fiber 12 is in contact with the roller 6. The relationship between the contact position of the optical fiber 12 with respect to the roller 6 and the degree of twist is determined in advance, and the contact position of the optical fiber 12 with respect to the roller 6 is observed at the time of manufacturing the optical fiber 12, whereby the degree of twist of the optical fiber 12 can be determined.

As described above, when adjusting a position or an inclination of the roller 6 in the adjustment step, the position or an inclination of the roller 6 is adjusted according to the position of the optical fiber 12 is in contact. This adjustment reduces the twist of the optical fiber 12, making it easier to align the positions of the cores when connecting the optical fiber 12, for example, when the optical fiber 12 is a multi-core fiber. When the optical fiber 12 is a polarization-maintaining fiber, by reducing the twist of the optical fiber 12, it is possible to minimize the misalignment of the polarization plane at the incident end with respect to the polarization plane at the emission end.

The embodiment of the method of manufacturing the optical fiber according to the present disclosure has been described above. However, the present disclosure is not necessarily limited to the above-described embodiments, and various modifications can be made without departing from the scope of the claims.

In the above-described embodiment, the example in which the measurement portion 10 sets the intersection point of the pair of inclined surfaces 6d as the reference point P has been described. However, the reference point P may be at the position other than the intersection of the pair of inclined surfaces 6d, and the position of the reference point P is not particularly limited.

In the above-described embodiment, an example was described in which the measurement portion 10 measures the position of the optical fiber 12 by detecting the distances from the measurement portion 10 to the roller 6 and to the optical fiber 12. However, the measurement portion 10 may measure the position of the optical fiber 12 by detecting scattered light or shadows. The measurement portion 10 is not necessarily be a laser measuring device, and may be, for example, a measuring device that performs microscopic imaging of the roller 6 and the optical fiber 12. The type of the measurement portion 10 is not particularly limited.

The roller 6 does not necessarily have the groove 6b. The shape of the roller 6 is not limited to the above-described embodiment and can be changed as appropriate. In the above-described embodiment, the measurement portion 10 measured the contact position of the optical fiber 12 in the roller 6, which is a bottom roller disposed vertically downward in the optical fiber preform 11. However, the measurement portion 10 may measure the contact position of the optical fiber 12 at a roller other than the bottom roller. The type of the roller to be measured by the measurement portion 10 is not particularly limited.

### REFERENCE SIGNS LIST

1 manufacturing apparatus
2 heating furnace
3 cooling apparatus
4 dice
5 resin curing portion
6 roller
6b groove
6c contact portion
6d inclined surface
6f upstream end portion
6g downstream end portion
7 capstan
8 winding drum
10 measurement portion
11 optical fiber preform
12 optical fiber
12b top point
15 control portion
A rotation axis
K distance
L laser beam
M monitor
P reference point

## Claims

1. A method of manufacturing an optical fiber comprising:
melting an optical fiber preform to draw an optical fiber;
bringing the optical fiber into contact with a roller that changes a running direction of the optical fiber that is drawn; and
measuring a position at which the optical fiber is in contact with the roller.

2. The method of manufacturing an optical fiber according to claim 1,
wherein the roller is a bottom roller configured to change the running direction of the optical fiber pulled out vertically downward.

3. The method of manufacturing an optical fiber according to claim 1 or 2,
wherein the measuring includes measuring a relative position of the optical fiber with respect to a reference point of the roller.

4. The method of manufacturing an optical fiber according to any one of claims 1 to 3,
wherein the measuring includes measuring position s at which the optical fiber is in contact with the roller at a plurality of portions of the roller.

5. The method of manufacturing an optical fiber according to any one of claims 1 to 4, comprising:
adjusting a position or an inclination of the roller according to the position measured in the measuring.
